# EUROPEAN PATENT APPLICATION

(11) **EP 1 742 319 A2**
(43) Date of publication of application: **10.01.2007**
(21) Application number: 06013193.5
(22) Date of filing: 27.06.2006
(51) Int. Cl.: H02H 7/085

(54) **Automated closing system with remote control of the force**

(30) Priority: 05.07.2005 IT BO20050452
(71) Applicant: Prastel SPA, 40138 Bologna (IT)
(72) Inventor: Baldini, Gian Luigi, 48012 Bagnacavallo (RA) (IT); Brini, Paolo, 40026 Imola (BO) (IT)
(74) Representative: Barberi, Vittorio

(57) **Abstract**

Automated closing system usable for passages or openings closed by a mobile structure, of the type comprising motor means, acting on said mobile structure, and means for limiting said motor, suitable to deactivate or modify the motion of said motor means in correspondence of the overcoming of a preset threshold value, system characterized in that it comprises means (7) for temporarily deactivating said means (5) for limiting the motor means (2), in order to allow, receiving a command, the movement of said mobile structure (4) also in conditions of overcoming of said threshold value.

## Description

The present invention relates to an automated closing system with remote control of the force, usable for passages or openings closed by mobile structures, as gates, doors, main doors, etc.

For simplifying the description, the term "mobile structure" will be used for defining any mobile structure which can be used for closing a passage and which can be constituted by a gate, a door, a main door, etc, provided with one or more leaves, of swinging or sliding type. The term "closing system" defines the whole of the means suitable to move the mobile structure, that is the motor means with the relevant command and control means used for the operations of opening and closing the passage.

According to the current regulation in safety matter, the force of the wing of a gate is limited by means of the control of preset values.

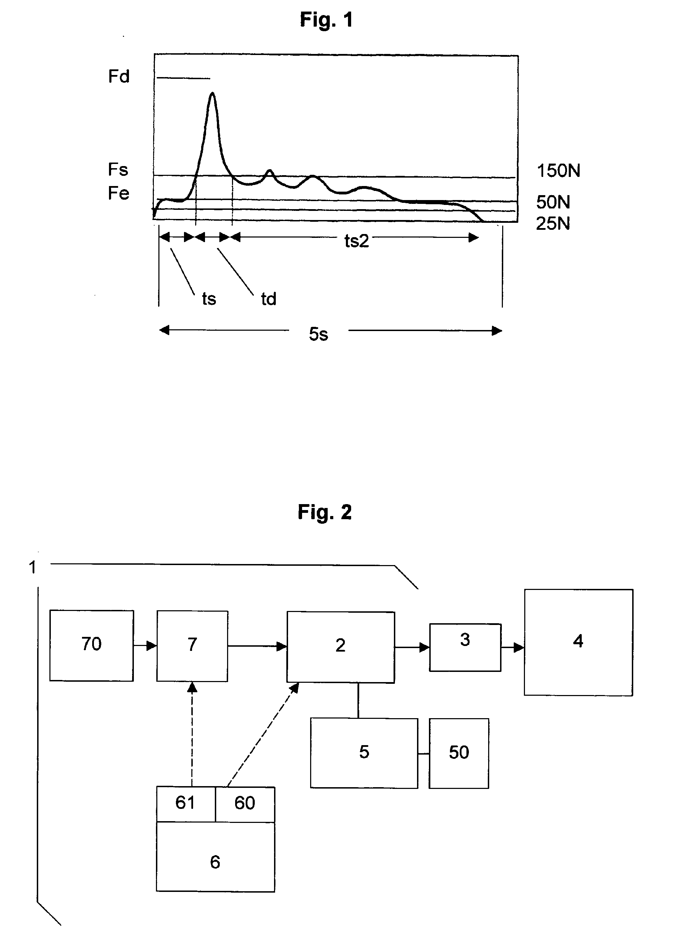

For a practical exemplification, in Fig.1 is shown a diagram relevant to the curve of one of the aforesaid values; in particular, it is shown -in relationship with the time- the force exercised on an obstacle at the moment of the impact, according to the regulation relevant to the safety of the automated closings (Cir. Machines 98/37/CE and, in the specific, norm EN12453).

The diagram represents a function which correlates values of the time (axis of the abscissas) with values of the found force (other axis). In the figure are shown, in addition to other parameters not cited in the present description, the four parameters which must be controlled; these parameters are:
- the dynamic force Fd (that is the peak of the measured force): must be inferior to a preset value, according to the type of closing and passage;
- dynamic time td, which covers a period of 0,75 sec, beginning from the moment in which the collision reaches 150N;
- static force Fs: the force after the period td and until 5 sec from the beginning; it doesn't have to exceed 150N;
- the final force Fe: the force that remains after 5 seconds from the beginning of the measure; it doesn't have to exceed 25N.

Practically, according to the limitation of the force, are used suitable limiting devices which prevent the force of impact exercised by the mobile structure on an obstacle disposed in the operating area, from exceeding the values of threshold above described.

As an example, if the motor means is an electric motor, the limiting device is a power limiting device acting on the driven shaft. Analogously, if the motor means acts on a oleo-dynamic cylinder, the limiting device will act on the values of pressure.

The devices for limiting the force are indispensable in order to guarantee the safety of the system in the normal operating conditions, but they have drawbacks relevant to some limit or emergency situations.

In fact, in some cases, it is possible that the limiting devices prevent or interrupt the motion of the mobile structure owing to obstacles which determine the increase of the demand of force for the motion. As an example, if the passage is partially covered by snow, leaves, earth, etc, the mobile structure has a greater resistance in its motion; this increase of the resistance determines the activation of the limiting devices which prevent the opening and/or the motion of the mobile structure and, consequently, it is not possible to obtain the opening. In other words, even if the system is potentially suitable to move the mobile structure, the limiting devices prevent such operation.

In order to exceed this impediment, with the automated closing systems currently in commerce, for commanding the opening of the mobile structure it is necessary to act on the control circuit or panel of the system, using keys or suitable instruments, with an operation which is executed by skilled workers.

It is easy to understand that this disadvantage can have negative repercussions, also on the health or the safety of the people, in occasion of urgency or emergency situations, when skilled workers aren't available in reasonably limited time for opening of the passage. Also without an emergency, the unsuccessful opening of the mobile structure determines however problems.

The main aim of the present invention is to provide an automated closing system which can eliminate the above mentioned drawbacks.

This result has been achieved according to the invention thanks to the idea of producing an apparatus having the features described in the independent claim. Other features relate to the dependent claims.

Among the advantages of a present invention there is that it is possible to obtain the motion of the mobile structure, that is the opening of the passage, without difficult operations, which require a specific technical background or suitable tools; that the motion of the mobile structure is allowed only temporarily, with the restoration of the original conditions after the motion intervention; that the system allows to regulate the action of means for deactivating, so that the inhibition of means of limitation can be partial or total; that the system can be used on mobile structures of various type; that the idea of solution of the present invention can be applied to automated systems already existing; that the system maintains its characteristics unchanged also after long periods of use, requiring a extremely reduced maintenance.

These and other advantages and characteristics of the invention will be best understood by anyone skilled in the art from a reading of the following description in conjunction with the attached drawings given as a practical exemplification of the invention, but not to be considered in a limitative sense, wherein:
- Fig.1 is a diagram which shows a possible curve of parameters to be controlled in an automated closing system;
- Fig. 2 is a block diagram which represents a possible embodiment of the connection among the parts which form the closing system.

An automated system of closing (1) in compliance with the present invention is usable for passages or openings closed by a mobile structure (4).

The system (1) comprises motor means (2) acting on the mobile structure (4) and means for limiting (5) said motor means (2), suitable to deactivate or modify the motion of the motor means (2) in correspondence of the overcoming of a preset threshold value.

The system (1) comprises means (7) for temporarily deactivating said means (5) for limiting the motor means (2), in order to allow, receiving a command, the movement of said mobile structure (4) also in conditions of overcoming of said threshold value.

With reference to the schematic example of Fig.2, in which the components are represented by blocks, the motor means (2) are connected to the mobile structure (4) by relevant transmission means (3). Practically, in the case of an electric motor (2) the means of transmission of the motion (3) can be formed, for a sliding gate, by the driven shaft of the motor, by one or more gears, by a rack rail, etc.

In this case, the limiting device (5) will be able to act on the electric motor measuring, as an example, the electrical current absorption necessary to the motion of the mobile structure (4) in order to operate in case the force exceeds a preset value of threshold.

Analogously, in case of oleo-dynamic cylinders, the limiting device (5) will use a value relating to the pressure in order to estimate the overcoming of the threshold value.

In a system of conventional type, the threshold value is settable and can be changed through a relative regulation device, represented by the block (50) in Fig.2.

In case of emergency situation or, however, when it is desired the motion of the mobile structure (4) also with the overcoming of the threshold value, it is necessary to act manually on the regulating device (50) in order to modify the threshold value, that is in order to supply a consent signal for activating the motor means (2) and, consequently, to move the mobile structure (4).

According to the present invention, the system (1) is provide with means (7) for temporarily deactivating the limiting device (5). In other words, using the means (7) for deactivating, the means for limiting (5) is "bypassed" with a simple command, also remote controlled, so as to obtain the motion of the mobile structure (4) also in conditions in which, normally, the motion is not allowed, that is over the threshold value.

Moreover, the system allows to regulate the action of deactivating means (7), so that the inhibition of limiting means (5) can be partial or total.

With reference to the example, the block (6) indicates a remote control usable for the normal opening of the passage. With (60) is indicated the push-button which is normally pushed for the opening. Pushing such push-button (60) is obtained (2) the activation of motor means if the limiting device (5) is not acting. In situations of overcoming of the threshold value, the intervention of the limiting means (5) prevents the motion, or determines the arrest or the reversal of the motion of motor means. According to the present invention, on the contrary, using the other push-button (61) a signal is sent to the means (7) for temporarily deactivating the limiting means (5).

The information sent through the push-button (61) can be codified in various way, so as to concur the partial or total deactivation of the limiting means (5).

From a constructive point of view, said deactivating means can be enclosed in a micro-controller or, more in general terms, in the electronic circuits that regulate the distribution of power to motor means (2).

In a typical application, in which the motor means (2) are constituted by direct current motors, the deactivation of limiting means (5) consists in supplying all the current that the feeding means can supply, bypassing the current dividing circuits normally used in order to respect the limits of force established by the norms.

In alternative, if the deactivation of limiting means (5) must be only partial, a current value greater than the value normally used will be supplied, but the action of limiting means (5) will be allowed with an elevated threshold.

The command signal for the deactivating means (7), can be sent non only by the remote control (6), but also using a lock push-button (70) opportunely connected to the means (7), in order to allow the deactivation with the relevant key, also without a remote control. Also in this case, the deactivation of the limiting means (5) will be temporary, so as to re-establish the original conditions after the emergency opening of the mobile structure (2).

Some of the moving, command and control means of the described and shown elements are of the known type for the technicians of the automation and, therefore, they have not been described in detail for sake of simplicity. Moreover, changes may be made to the form, dimensions, component part locations, and type of materials employed in the embodiment described and illustrated herein without, however, departing from the scope of the present invention.

## Claims

1. Automated closing system usable for passages or openings closed by a mobile structure, of the type comprising motor means, acting on said mobile structure, and means for limiting said motor, suitable to deactivate or modify the motion of said motor means in correspondence of the overcoming of a preset threshold value, system **characterized in that** it comprises means (7) for temporarily deactivating said means (5) for limiting the motor means (2), in order to allow, receiving a command, the movement of said mobile structure (4) also in conditions of overcoming of said threshold value.

2. Automated closing system according to claim 1, **characterized in that** said means (7) for temporary deactivating are remote controlled.

3. Automated closing system according to claim 1, **characterized in that** said means (7) for temporary deactivating are controlled by a lock push-button (70).

4. Automated closing system according to claim 1, **characterized in that** said means (7) for temporary deactivating is adjustable so as to deactivate only partially the intervention of said means for limiting (5).
